# EUROPEAN PATENT APPLICATION

(11) **EP 2 615 871 A1**
(43) Date of publication of application: **17.07.2013**
(21) Application number: 11835534.6
(22) Date of filing: 28.06.2011
(51) Int. Cl.: H04W 48/16

(54) **CHANNEL SCANNING METHOD AND SYSTEM FOR WIRELESS NETWORKS**

(30) Priority: 29.10.2010 CN 201010526378
(71) Applicant: ZTE Corporation, Shenzhen, Guangdong 518057 (CN)
(72) Inventor: LV, Kaiying, Shenzhen Guangdong 518057 (CN); SUN, Bo, Shenzhen Guangdong 518057 (CN); LI, Nan, Shenzhen Guangdong 518057 (CN); LI, Feng, Shenzhen Guangdong 518057 (CN); JIANG, Jing, Shenzhen Guangdong 518057 (CN)
(74) Representative: Ilgart, Jean-Christophe
(86) International application number: PCT/CN2011/076527
(87) International publication number: WO 2012/055260

(57) **Abstract**

The disclosure discloses a method and a system for channel scanning in a wireless network. The method includes that an Access Point (AP) and/or Non-AP Stations (STAs) associated with the AP performs channel scanning according to one or more of the following ways: Way A: the AP performs Overlapping Basic Service Set (OBSS) channel scanning on channels within one or more different channelizing sets with a same period or with different periods; Way B: part or all of STAs associated with the AP perform OBSS channel scanning on channels within one or more different channelizing sets with a same period or with different periods; and Way C: the AP or part or all of STAs associated with the AP performs single OBSS channel scanning on one or more channelizing sets under event triggering. With the present disclosure, the channel scanning procedure of an equipment supporting multiple channelizing set schemes under circumstance of OBSS is planned.

## Description

### TECHNICAL FIELD

The disclosure relates to the field of wireless communications, in particular to a method and a system for channel scanning in a wireless network.

### BACKGROUND

Currently, in the field of wireless networks, Wireless Local Area Network (Wireless LAN, WLAN) develops rapidly, with an ever-growing demand for WLAN coverage. The Institute of Electrical and Electronics Engineers Industry Standard (IEEE802.11) team successively defines a series of most common WLAN techniques standards such as 802.11a, 802.11b, 802.11g, etc.; other mission teams subsequently appear in effort to develop specifications related to improvement of existing 802.11 techniques, for example, mission team 802.11n brings forth the requirement of High Throughput (HT) to support data speed as high as 600 Million bits per second (Mbps); mission team 802.11ac further brings forth the concept of Very High Throughput (VHT) which increases the data speed to 1Gbps. A new protocol is required to be backwards compatible with a previous protocol.

In the specification 802.11, one Access Point (AP) and multiple Non-AP Stations (STAs) associated with the AP form a Basic Service Set (BSS). The WLAN defined by IEEE802.11 enables multiple STAs to share a wireless channel by using Carrier Sense Multiple Access with Collision Avoidance (CSMA/CA).

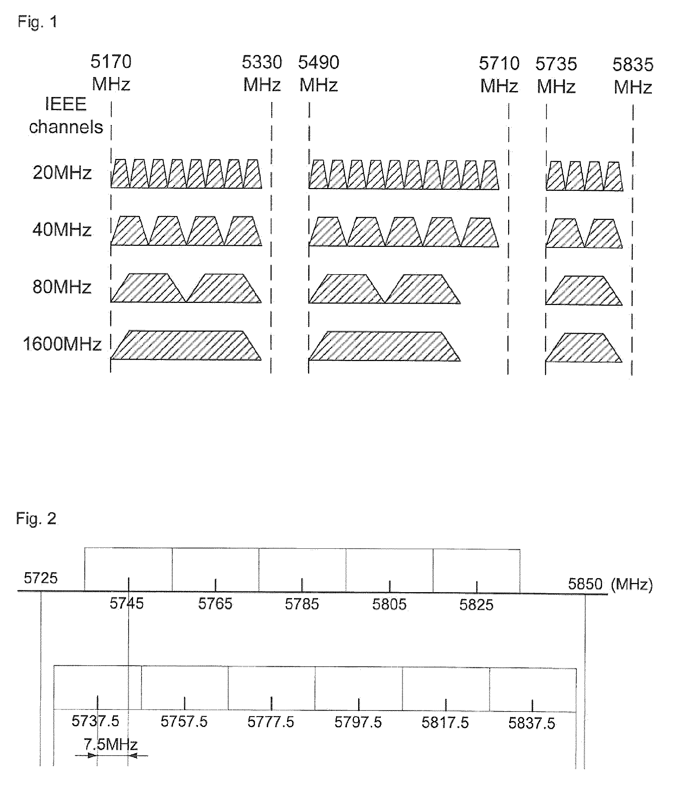

As the protocol 802.11 evolves, traditional 20MHz channel bandwidth has been extended to 80MHz, 120MHz, or even 160MHz, and those wide bandwidths are formed by binding a number of 20MHz channels, wherein one 20MHz channel is called a master channel or the first channel, other 20MHz channels are called subsidiary channel(s) or the second channel, the third channel, etc. Thus, on a 5GHz frequency spectrum, a wide bandwidth is formed by non-overlapping 20MHz channels, wherein each non-overlapping 20MHz channel is called a fundamental channel. According to the channelizing method in a relevant art, a 160MHz channel is formed by two adjacent or nonadjacent 80MHz channels, wherein each 80MHz channel is formed by two adjacent 40MHz channels, and each 40M channel is formed by two adjacent 20MHz channels. An example of the formation of various channels of different bandwidths in a wide bandwidth system is shown in Fig. 1. Wherein if central frequency points start from 5.745GHz and division is made with every channel bandwidth of 20MHz, there are 5 non-overlapping 20MHz channels inside the frequency range of 5.735GHz to 5.835GHz planned by nations such as the USA, and the maximal channel bandwidth is 80MHz; while under certain circumstances, the frequency planning of some nations may not be exploited adequately under the aforementioned channelizing definition, thus a different channelizing method is required to make full use of frequency spectrum resources; for example, in China, the frequency range that can be adopted for WLAN is a frequency range of a total width of 125MHz between 5.725GHz and 5.850GHz. If each central frequency point in the aforementioned channelizing method is offset toward the lower frequency point direction by 7.5MHz, 6 non-overlapping 20MHz channels will be generated inside the frequency range, with the maximal channel bandwidth to be 120MHz, wherein a schematic view of central frequency points in the two aforementioned channelizing methods is shown in Fig. 2. Hereinafter, the channels formed by the former channelizing method are called the first channel set, and the channels formed by the latter are called the second channel set.

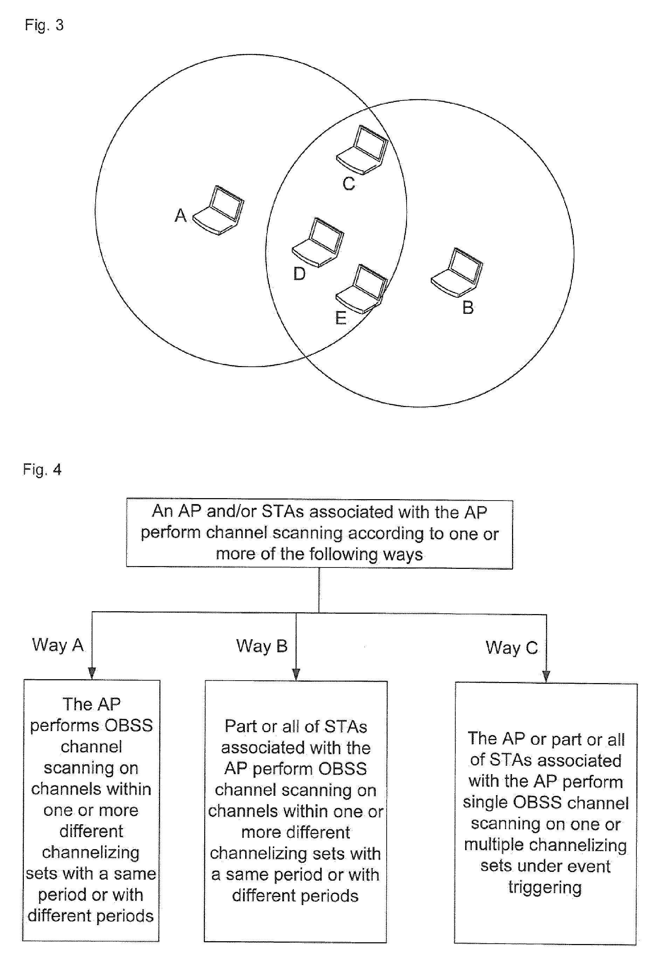

In a practical application environment, coverage area overlapping occurs extremely commonly to multiple BSSs, thus an Overlapping BSS (OBSS) is formed. In the case of OBSSs, multiple wireless STAs belonging to different BSSs will share the same channel, and as shown in Fig. 3, the AP A and the AP B form an OBSS, then the STAs C, D, and E located in the overlapping area of A and B may use an identical channel, thereby resulting in potential interference to each other. In order to avoid interference and ensure normal and effective operation of an OBSS, an AP needs to scan and monitor the OBSS, and STAs associated with the AP also need to perform active or passive scanning on the OBSS. For active scanning, OBSS system information is acquired by sending a probe_request frame, and for passive scanning, OBSS system information is acquired by intercepting a system Beacon frame.

In the frequency range of 5.725GHz to 5.850GHz, there may simultaneously exist multiple BSSs operating on different channel bandwidths or on different channelizing sets. For example, a 802.11n equipment operates on the first channel set with possible operating bandwidth of 20/40MHz, and a 802.11ac equipment operates on the first channel set with possible operating bandwidth of 20/40/80MHz, or operates on the second channel set with possible operating bandwidth of 20/40/80/120MHz. In this case, the OBSSs operating on different channel sets will bring serious interference to each other if their channels overlap or partly overlap, causing reduced transmission efficiency of a wide bandwidth or even a stoppage. In order to assure normal operation of OBSSs operating on different channel sets, an AP needs to acquire OBSS system information directly or indirectly, to assure a BSS to which the AP belongs does not influence an existing OBSS.

Therefore, the issue pressing for a solution in a new generation 802.11 protocol is how to plan an equipment supporting existing and new channelizing schemes to perform OBSS channel scanning under the OBSS circumstance, so as to avoid interference, realize effective coexistence, and increase average effective bandwidth of the system.

### SUMMARY

Accordingly, the primary objective of the disclosure is to provide a method and a system for channel scanning in a wireless network, so as to plan a channel scanning procedure of an equipment supporting multiple channelizing set schemes under the OBSS circumstance.

To achieve this objective, the technical solution of the disclosure is implemented as follow.

The disclosure provides a method for channel scanning in a wireless network, including:
performing, by an Access Point (AP) and/or Non-AP Stations (STAs) associated with the AP, channel scanning according to one or more of the following ways:
   Way A: performing, by the AP, Overlapping Basic Service Set (OBSS) channel scanning on channels within one or more different channelizing sets with a same period or with different periods;
   Way B: performing, by part or all of STAs associated with the AP, OBSS channel scanning on channels within one or more different channelizing sets with a same period or with different periods; and
   Way C: performing, by the AP or part or all of the STAs associated with the AP, single OBSS channel scanning on one or more channelizing sets under event triggering.

The method may further include:
performing, by the AP or the STAs associated with the AP, scanning according to a distributing sequence of central frequency points of part or all of fundamental channels within one channelizing set; or
first performing, by the AP or the STAs associated with the AP, scanning according to a distributing sequence of central frequency points of part or all of fundamental channels within one channelizing set, and then performing scanning according to a distributing sequence of central frequency points of part or all of fundamental channels within another channelizing set; or
performing, by the AP or the STAs associated with the AP, unidirectional scanning according to a distributing sequence of central frequency points of part or all of fundamental channels within all channelizing sets supported.

Wherein, the Way A may further include:
performing, by the AP, periodic scanning on part or all of fundamental channels of a channelizing set to which a channel used by the AP belongs; and
performing, by the AP, periodic scanning on part or all of fundamental channels of another channelizing set different from the channelizing set to which the channel used by the AP belongs.

The method may further include: scanning, by the AP, part or all of fundamental channels within the one or more channelizing sets and receiving system information, then determining whether it can continue operating on original channel or starts a Basic Service Set (BSS) on a new channel according to the system information acquired, and broadcasting or unicasting a channel adjustment message when a channel adjustment or invocation of a new channel is required, wherein the channel adjustment message comprises at least one of: channel adjustment indication information and channel adjustment time information.

Wherein, the channel adjustment message may further include at least one of: channelizing set information, master channel information, subsidiary channel information, and bandwidth information.

Wherein, the Way B may further include:
performing, by part or all of STAs associated with the AP, active or passive periodic scanning with a scanning parameter configured locally or informed by the AP on part or all of fundamental channels of a channelizing set to which a channel used by the part or all of STAs associated with the AP belongs; and
performing, by part or all of STAs associated with the AP, active or passive periodic scanning with a scanning parameter configured locally or informed by the AP on part or all of fundamental channels of another channelizing set different from the channelizing set to which the channel used by the part or all of STAs associated with the AP belongs.

Wherein, the Way B may further include:
performing, by the part or all of STAs associated with the AP, OBSS channel scanning and reporting, by the part or all of STAs associated with the AP, a scanning result to the associated AP.

Wherein, the scanning result may include at least one of: channel/bandwidth occupation status information and/or channel/bandwidth enable/disable status information.

Wherein, the event triggering may be at least one of: interference detecting, higher level signalling, BSS establishing, and BSS starting to operate on a channelizing set different from a channelizing set where the BSS operates formerly.

The disclosure further provides a system for channel scanning in a wireless network, including: an Access Point (AP) and Non-AP Stations (STAs) associated with the AP,
the AP and/or the STAs associated with the AP are/is configured to perform channel scanning according to one or more of the following ways:
   Way A: the AP performs Overlapping Basic Service Set (OBSS) channel scanning on channels within one or more different channelizing sets with a same period or with different periods;
   Way B: part or all of STAs associated with the AP performs OBSS channel scanning on channels within one or more different channelizing sets with a same period or with different periods; and
   Way C: the AP or part or all of STAs associated with the AP performs single OBSS channel scanning on one or more channelizing sets under event triggering.

The AP or the STAs associated with the AP may perform scanning according to a distributing sequence of central frequency points of part or all of fundamental channels within one channelizing set; or
the AP or the STAs associated with the AP first may perform scanning according to a distributing sequence of central frequency points of part or all of fundamental channels within one channelizing set, and then perform scanning according to a distributing sequence of central frequency points of part or all of fundamental channels within another channelizing set; or
the AP or the STAs associated with the AP may perform unidirectional scanning according to a distributing sequence of central frequency points of part or all of fundamental channels within all channelizing sets supported.

Wherein, the AP may be further configured to
perform periodic scanning on part or all of fundamental channels of a channelizing set to which a channel used by the AP belongs; and perform periodic scanning on part or all of fundamental channels of another channelizing set different from the channelizing set to which the channel used by the AP belongs.

Wherein the AP may be further configured to scan on part or all of fundamental channels within the one or more channelizing sets and receive system information, then determine whether it can continue operating on original channel or starts a Basic Service Set (BSS) on a new channel according to the system information acquired, and broadcast/unicast a channel adjustment message when a channel adjustment or invocation of a new channel is required, wherein the channel adjustment message includes at least one of: channel adjustment indication information and channel adjustment time information.

Wherein, the channel adjustment message may further include at least one of: channelizing set information, master channel information, subsidiary channel information, and bandwidth information.

Wherein, the part or all of STAs associated with the AP may be further configured to perform active or passive periodic scanning with a scanning parameter configured locally or informed by the AP on part or all of fundamental channels of a channelizing set to which a channel used by the part or all of STAs associated with the AP belongs; and perform active or passive periodic scanning with a scanning parameter configured locally or informed by the AP on part or all of fundamental channels of another channelizing set different from the channelizing set to which the channel used by the part or all of STAs associated with the AP belongs.

Wherein, the part or all of STAs associated with the AP may be further configured to perform OBSS channel scanning and report a scanning result to the associated AP.

Wherein, the scanning result may include at least one of: channel/bandwidth occupation status information and/or channel/bandwidth enable/disable status information.

Wherein the event triggering may be at least one of: interference detecting, higher level signalling, BSS establishing, and BSS starting to operate on a channelizing set different from a channelizing set where the BSS operates formerly.

In the method and the system for channel scanning in a wireless network provided by the present disclosure, an AP and/or STAs associated with the AP performs channel scanning within a given frequency range according to one or more of the following ways: Way A: the AP performs OBSS channel scanning on channels within one or more different channelizing sets with a same period or with different periods; Way B: part or all of the STAs associated with the AP perform OBSS channel scanning on channels within one or more different channelizing sets with a same period or with different periods; and Way C: the AP or part or all of the STAs associated with the AP performs single OBSS channel scanning on one or more channelizing sets under event triggering. With the present disclosure, the channel scanning by an equipment supporting multiple channelizing set schemes under the OBSS circumstance is planned, thereby achieving the objective of avoiding interference and realizing effective co-existence, as well as increasing average effective bandwidth of the system.

### BRIEF DESCRIPTION OF THE DRAWINGS

Fig. 1 is a schematic view of formation of various channels with different bandwidths in an existing wide bandwidth system;
Fig. 2 is a schematic view of central frequency points of fundamental channels in different channelizing sets in a relevant art;
Fig. 3 is a schematic view of an OBSS in a relevant art;
Fig. 4 is a flowchart of a method for channel scanning in a wireless network according to the disclosure;
Fig. 5 is schematic view 1 of formation of channelizing bandwidths in different channelizing sets in an embodiment of the disclosure;
Fig. 6 is schematic view 2 of formation of channelizing bandwidths in different channelizing sets in an embodiment of the disclosure;
Fig. 7 is a schematic view of channel scanning in embodiment 1 of the disclosure;
Fig. 8 is a schematic view of channel scanning in embodiments 1 and No.2 of the disclosure; and
Fig. 9 is a schematic view of channel scanning in embodiments 1, 2, and 3 of the disclosure.

### DETAILED DESCRIPTION

The technical solution of the disclosure is further elaborated hereinafter with reference to the figures and specific embodiments.

A method for channel scanning within a given frequency range in a wireless network provided by the present disclosure is performing channel scanning in multiple different channelizing sets. As shown in Fig. 4, the method can be implemented in the following three ways.

Scanning Way 1: an AP performs OBSS channel scanning in one or more channelizing sets with the same period or with different periods. For example, the AP performs periodic scanning with a first period on part or all of fundamental channels in the first channelizing set; the AP performs periodic scanning with a second period on part or all of fundamental channels in the second channelizing set. Moreover, the first and the second periods may be the same or different.

Furthermore, the AP or Non-AP stations (STAs) associated with the AP scans according to the distributing sequence of the central frequency points of part or all of fundamental channels within one channelizing set; and when the AP or the STAs associated with the AP scans in multiple channelizing sets, the AP first scans according to the distributing sequence of the central frequency points of part or all of fundamental channels within one channelizing set, then scans according to the distributing sequence of the central frequency points of part or all of fundamental channels within another channelizing set. Alternatively, the AP or the STAs associated with the AP performs unidirectional scanning according to the distributing sequence of the central frequency points of part or all of fundamental channels within all channelizing sets supported.

Preferably, the AP can perform periodic scanning on part or all of fundamental channels of a channelizing set to which a channel used by the AP belongs; and perform periodic scanning on part or all of fundamental channels of another channelizing set different from the one to which the channel used by the AP belongs.

The AP scans part or all of fundamental channels within the one or multiple channelizing sets and receives system information, determines whether it can continue operating on the original channel according to the acquired system information, and broadcasts/unicasts a channel adjustment message when channel adjustment is required, wherein the channel adjustment message includes at least one of channel adjustment indication information, channel adjustment time information, and the like. The channel adjustment message may further include at least one of channelizing set information, master channel information, subsidiary channel information, and bandwidth information.

Scanning Way 2: part or all of STAs associated with the AP perform active or passive OBSS channel scanning on channels within one or more different channelizing sets with a same period or with different periods. For example, the part or all of STAs associated with the AP perform active or passive periodic scanning with a period configured by the AP on part or all of fundamental channels within the first channelizing set; and part or all of STAs associated with the AP perform active or passive periodic scanning with a period configured by the AP on part or all of fundamental channels within the second channelizing set;

Furthermore, the associated STAs support operation inside the first channelizing set and the second channelizing set. The STAs scan according to a distributing sequence of central frequency points of part or all of fundamental channels within one channelizing set; or the STAs first perform active or passive scanning according to a distributing sequence of central frequency points of fundamental channels within one channelizing set, and then perform active or passive scanning according to a distributing sequence of central frequency points of fundamental channels within another channelizing set; or the STAs perform active or passive unidirectional scanning according to a distributing sequence of central frequency points of fundamental channels within all the channelizing sets supported.

Furthermore, the scanning result includes at least one of: channel/bandwidth occupation status information, channel/bandwidth enable/disable status information, and the like.

The part or all of STAs associated with the AP support operation inside the first channelizing set and the second channelizing set, and the part or all of STAs associated with the AP may be exempted from the scanning operation under certain circumstances.

Preferably, the part or all of STAs associated with the AP may perform active or passive periodic scanning with a scanning parameter configured locally or informed by the AP on part or all of fundamental channels of a channelizing set to which a channel used by the part or all of STAs belongs; and the part or all of STAs associated with the AP further perform active or passive periodic scanning with a scanning parameter configured locally or informed by the AP on part or all of fundamental channels of another channelizing set different from the channelizing set to which the channel used by the part or all of STAs belongs.

Furthermore, the part or all of STAs associated with the AP scan and monitor the channels, and report a scanning result. Furthermore, when information monitored by the STAs within a continuous period of time is to change the current operating bandwidth of the BSS, the part or all of STAs associated with the AP report a scanning result to the associated AP immediately. The scanning result may include at least one of channel/bandwidth occupation status information, channel/bandwidth enable/disable status information, and the like.

Scanning Way 3: the aforementioned scanning method may also be applied to single scanning caused by event triggering. The event triggering includes at least one of: interference detecting, higher level signalling, BSS establishing, BSS starting to operate on a channelizing set different from a channelizing set of an existing operation, and the like.

Furthermore, the AP or STAs associated with the AP scans according to the distributing sequence of the central frequency points of part or all of fundamental channels within one channelizing set; or the AP or STAs associated with the AP first performs single scanning according to the distributing sequence of the central frequency points of all fundamental channels within one channelizing set, then performs single scanning according to the distributing sequence of the central frequency points of all fundamental channels within another channelizing set; Alternatively, the AP or the STAs associated with the AP performs single unidirectional scanning according to the distributing sequence of the central frequency points of all fundamental channels within all channelizing sets supported.

The aforementioned method for channel scanning in a wireless network is further elaborated below with specific embodiments.

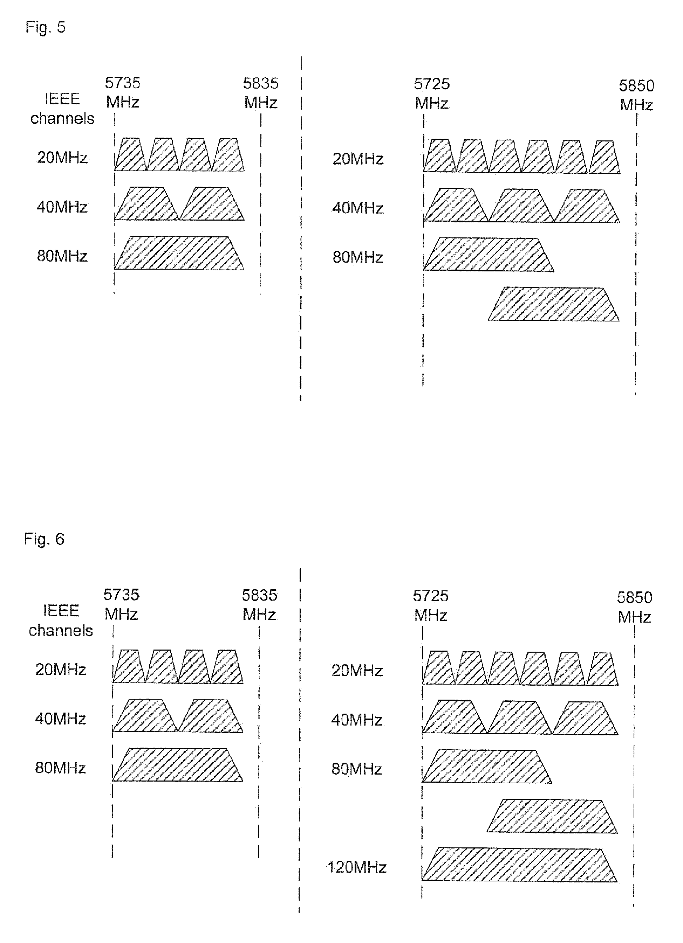

In an embodiment of the disclosure, a first channelizing set involved includes channelized bandwidths within a frequency range of 5735MHz~5835MHz, and a second channelizing set involved includes channelized bandwidths within a frequency range of 5725MHz~585OMHz. The central frequency points of the fundamental channels in the different channelizing sets involved are as shown in Fig. 2, and the relevant channelized bandwidths include 20MHz, 40MHz, 80MHz, 120MHz, and the like, as shown in Fig. 5 and Fig. 6.

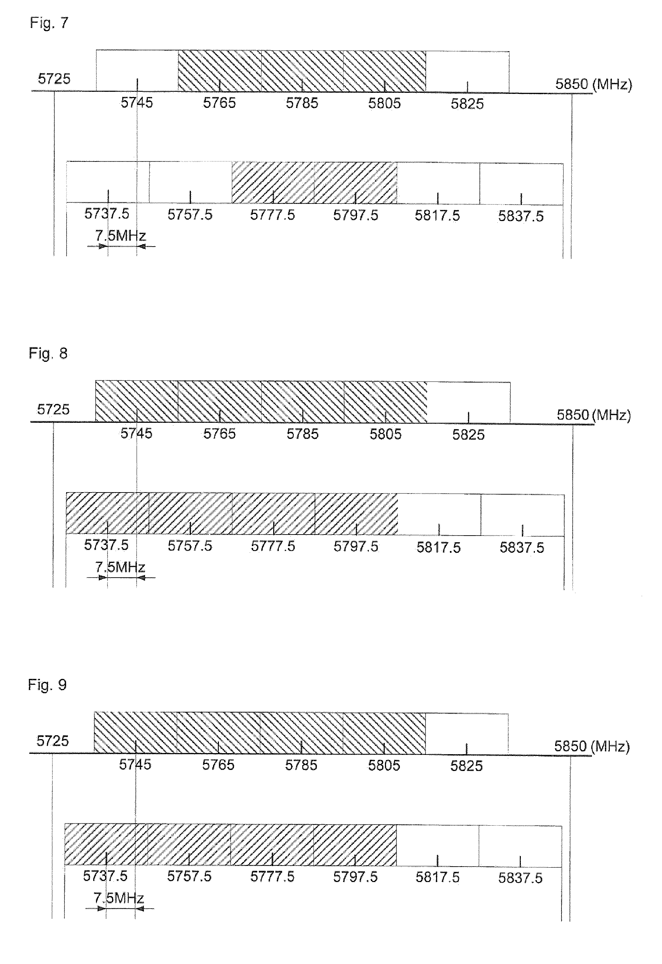

In Embodiment 1 of the disclosure, implementation of scanning inside multiple channelizing sets mainly includes that:
an AP with wide bandwidth capability (such as 80MHz and above) and supporting two kinds of channelizing schemes chooses to start a 20/40MHz BSS on the second channelizing set, wherein the two fundamental channel central frequency points corresponding to the bandwidth are 5777.5MHz and 5797.5MHz, respectively; and after starting the BSS, the AP scans on part or all of fundamental channels within the aforementioned first and the second channelizing sets with a same period or with different periods, as shown in Fig. 7, Fig. 8, and Fig. 9.

For example, the AP performs periodic scanning on part or all of fundamental channels within the second channelizing set. In this example, since the BSS started by the AP operates on 20/40MHz, the AP may scan any two adjacent 40MHz channels or one 40MHz channel adjacent to the 40MHz channelized bandwidth being operated maximally currently. Alternatively, the AP may scan all the fundamental channels inside the channelizing set.

The AP may also perform periodic scanning on part or all of fundamental channels within the first channelizing set. For example, the AP may scan the fundamental channels inside the first channelizing set overlapping or partly overlapping with the 40MHz channelized bandwidth being operated maximally currently, namely, fundamental channels with central frequency points 5765MHz, 5785MHz, and 5805MHz, respectively. Alternatively, the AP may scan the fundamental channels overlapping or partly overlapping with the 80MHz channelized bandwidth including central frequency points 5777.5MHz and 5797.5MHz inside the first channelizing set. Alternatively, the AP may scan all the fundamental channels inside the first channelizing set.

The period with which the AP scans channelizing bandwidths inside the first and the second channelizing sets may be the same or may be different.

If the period with which the AP scans channelizing bandwidths inside the first and the second channelizing sets is the same, then the AP may scan respectively according to a distributing sequence of central frequency points of the fundamental channels requiring scanning within each channelizing set, or scan according to a distributing sequence of central frequency points of the fundamental channels within the two channelizing sets requiring scanning.

If the AP starts a 20/40MHz BSS on the first channelizing set, the AP may scan on the first and the second channelizing sets in a way as aforementioned.

In Embodiment 2 of the disclosure, implementation of scanning inside multiple channelizing sets mainly includes that:
an AP with wide bandwidth capability (such as 80MHz and above) and supporting two kinds of channelizing schemes starts a 20/40/80MHz BSS on the second channelizing set, wherein the four fundamental channel central frequency points corresponding to the bandwidth are 5737.5MHz, 5757.5MHz, 5777.5MHz, and 5797.5MHz, respectively; and after starting the BSS, the AP scans part or all of fundamental channels in channelizing sets within the aforementioned first and second channelizing sets with a same period or with different periods, as shown in Fig. 8 and Fig. 9.

For example, the AP performs periodic scanning on part or all of fundamental channels in channelizing sets within the second channelizing set. In this example, since the BSS started by the AP operates on 20/40/80MHz, the AP may scan all fundamental channels inside the 80MHz channelized bandwidth being operated maximally currently. Alternatively, the AP may scan all the fundamental channels inside the second channelizing set.

The AP may also perform periodic scanning on part or all of fundamental channels in channelizing sets within the first channelizing set. The AP may scan, within the first channelizing set, the fundamental channels overlapping or partly overlapping with the 80MHz channelized bandwidth being operated maximally currently, the central frequency points of which are 5745MHz, 5765MHz, 5785MHz, and 5805MHz, respectively. Alternatively, the AP may scan all the fundamental channels inside the first channelizing set.

The period with which the AP scans channelizing bandwidths inside the first and the second channelizing sets may be the same or may be different.

If the period with which the AP scans channelizing bandwidths inside the first and the second channelizing sets is the same, the AP may scan respectively according to a distributing sequence of central frequency points of the fundamental channels requiring scanning within each channelizing set, or scan according to a distributing sequence of central frequency points of the fundamental channels within the two channelizing sets requiring scanning.

If the AP starts a 20/40/80MHz BSS on the first channelizing set, the AP may scan on the first and the second channelizing sets in a way as aforementioned.

In Embodiment 3 of the disclosure, implementation of scanning inside multiple channelizing sets mainly includes that:
after starting a 20/40/80/120MHz BSS on the second channelizing set, an AP with wide bandwidth capability (such as 120 MHz) and supporting two kinds of channelizing schemes scans on all fundamental channels in channelizing sets within the aforementioned first and/or the second channelizing sets with a same period or with different periods, as shown in Fig. 9.

For example, the AP performs periodic scanning on part or all of fundamental channels inside the second channelizing set. In this example, since the BSS started by the AP operates on 20/40/80/120MHz, the AP may scan all fundamental channels inside the 120MHz channelized bandwidth being operated maximally currently.

The AP performs periodic scanning on all fundamental channels in channelizing sets within the first channelizing set.

The period with which the AP scans channelizing bandwidths inside the first and the second channelizing sets may be the same or may be different.

If the period with which the AP scans channelizing bandwidths inside the first and the second channelizing sets is the same, the AP may scan respectively according to a distributing sequence of central frequency points of the fundamental channels requiring scanning within each channelizing set, or scan according to a distributing sequence of central frequency points of the fundamental channels within the two channelizing sets requiring scanning.

The scenario of Embodiment 4 of the disclosure is the same as that of Embodiment 1, wherein the method for part or all of STAs associated with the AP to implement scanning inside multiple channelizing sets mainly includes that:
after an AP with wide bandwidth capability (such as 80MHz and above) and supporting two kinds of channelizing schemes starts a 20/40MHz BSS on the second channelizing set, part or all of STAs associated with the AP perform active or passive scanning on part or all of fundamental channels within the first and/or the second channelizing sets with a same period or with different periods. For the active scanning, system information is acquired by sending a probe request frame, and for the passive scanning, system information is acquired by sensing a system beacon frame.

For example, STAs associated with the AP perform periodic scanning on part or all of fundamental channels within the second channelizing set. In this example, since the BSS started by the AP operates on 20/40MHz, said STAs associated with the AP may scan 4 fundamental channels on an 80MHz bandwidth including the 40MHz channelized bandwidth being operated maximally currently. Alternatively, all fundamental channels inside the second channelizing set may be scanned.

The STAs associated with the AP perform periodic scanning on part or all of fundamental channels within the first channelizing set. For example, said STAs associated with the AP may scan the fundamental channels inside the first channelizing set overlapping or partly overlapping with the 80MHz channelized bandwidth inside the second channelizing set, the central frequency points of which are 5745MHz, 5765MHz, 5785MHz, and 5805MHz, respectively. Alternatively, the STAs associated with the AP may scan all the fundamental channels inside the first channelizing set.

The period with which said STAs associated with the AP scan channelizing bandwidths inside the first and the second channelizing sets may be the same or may be different.

Said STAs associated with the AP may be exempted from the scanning operation if within a measurement duration, the transmission time for said STAs associated with the AP to send data or receive data sent to themselves is smaller than a certain threshold, or the ratio of said transmission time to the measurement duration is smaller than a certain threshold.

The scenario of Embodiment 5 of the disclosure is the same as that of Embodiment 4, wherein the method of part or all of STAs associated with the AP reporting a scanning result mainly includes that:
STAs associated with the AP scan and monitor said channels according to a scanning parameter configured locally or informed by the AP, and immediately reports to the AP channel/bandwidth enable/disable status information (wherein for example channel/bandwidth enable information indicates that an 80MHz channelized bandwidth inside the second channelizing set is allowed to be used) after said STAs determine that the information acquired by scanning is to change the current operating bandwidth of the BSS, and have acquired said information for a continuous period of time, wherein in this embodiment, the STAs associated with the AP acquire by scanning that no OBSS is detected on fundamental channels with central frequency points 5817.5MHz and 5837.5MHz or on fundamental channels with central frequency points 5737.5MHz and 5757.5MHz inside the second channelizing set, and no OBSS is detected on channels overlapping or partly overlapping with said fundamental channels inside the first channelizing set.

The scenario of Embodiment 6 of the disclosure is the same as that of Embodiment 4, wherein the method of part or all of STAs associated with the AP reporting a scanning result mainly includes that:
STAs associated with the AP scan and monitor said channels according to a scanning parameter configured locally or informed by the AP; said STAs report to the AP channel/bandwidth occupation status information (wherein for example the channel/bandwidth occupation status information indicates the occupied fundamental channels inside the second channelizing set and/or the first channelizing set) if in this embodiment, the STAs associated with the AP acquire by scanning that an OBSS is detected on fundamental channels with central frequency points 5817.5MHz and 5837.5MHz or on fundamental channels with central frequency points 5737.5MHz and 5757.5MHz inside the second channelizing set, or an OBSS is detected on channels overlapping or partly overlapping with said fundamental channels inside the first channelizing set.

Said STAs immediately report to the AP channel/bandwidth enable/disable status information after said STAs determine that the information acquired by scanning is to change the current operating bandwidth of the BSS, and have acquired said information for a continuous period of time.

The scenario of Embodiment 7 of the disclosure is the same as that of Embodiment 2, wherein implementation of scanning inside multiple channelizing sets mainly includes that:
after an AP with wide bandwidth capability (such as 80MHz and above) and supporting two kinds of channelizing schemes starts a 20/40/80MHz BSS on the second channelizing set, part or all of STAs associated with the AP perform active or passive scanning on part or all of fundamental channels in channelizing sets within the first and/or the second channelizing sets with a same period or with different periods.

For example, STAs associated with the AP perform periodic scanning on part or all of fundamental channels in channelizing sets within the second channelizing set. In this embodiment, since the BSS started by the AP operates on 20/40/80MHz with the central frequency point of 5737.5MHz, 5757.5MHz, 5777.5MHz, and 5797.5MHz, respectively, said STAs associated with the AP may scan all fundamental channels inside the 80MHz channelized bandwidth being operated maximally currently. Alternatively, all fundamental channels inside the frequency range may be scanned.

The STAs associated with the AP perform periodic scanning on part or all of fundamental channels within the first channelizing set. For example, said STAs associated with the AP may scan the fundamental channels inside the first channelizing set overlapping or partly overlapping with the 80MHz channelized bandwidth being operated maximally currently, the central frequency points of which are 5745MHz, 5765MHz, 5785MHz, and 5805MHz, respectively. Alternatively, said STAs associated with the AP may scan all the fundamental channels inside the first channelizing set.

The period with which said STAs associated with the AP scan channelizing bandwidths inside the first second channelizing set and/or the second channelizing set may be the same or may be different.

Said STAs associated with the AP may be exempted from the scanning operation if within a measurement duration, the transmission time for said STAs associated with the AP to send data or receive data sent to said STAs associated with the AP themselves is smaller than a certain threshold, or the ratio of said transmission time to the measurement duration is smaller than a certain threshold.

The method reporting scanning information by said STAs associated with the AP is the same as in Embodiment 5 or Embodiment 6.

The scenario of Embodiment 8 of the disclosure corresponds to that of Embodiment 1, Embodiment 2, and Embodiment 3, wherein operation after the AP scans channels and acquires information includes that:
the AP scans on part or all of fundamental channels inside the aforementioned one or more channelizing sets and receives system information or another relevant wireless frame, and determines whether it can continue operating on the original channel or starts a BSS on a new channel according to the acquired information, and broadcasts/unicasts a channel adjustment message including at least one of channel adjustment indication information, channel adjustment time information, and the like. Wherein, the channel adjustment message may further include at least one of channelizing set information, master channel information, subsidiary channel information, bandwidth information, and the like.

Implementation of scanning inside multiple channelizing sets of Embodiment 9 mainly includes that:
scanning inside multiple channelizing sets may be caused by event triggering, which includes but is not limited to at least one of interference detecting, higher level signalling, BSS establishing, and the BSS starting to operate on a channelizing set different from the channelizing set where the BSS operates formerly.

For example, before establishing a BSS, an AP with wide bandwidth capability (for example 120MHz) needs to scan part or all of fundamental channels on the first channelizing set and/or the second channelizing set to ensure that the BSS to be established will not interfere with other OBSSs within its maximal operating bandwidth.

For another example, when the AP or STAs operates under the BSS to which the AP or the STAs belongs, if the AP or the STAs discovers relatively high interference by performing interference detection on channels, then the AP or the STAs starts scanning on part or all of fundamental channels on the first channelizing set and/or the second channelizing set, to ensure that the current BSS operates inside a proper maximal operating bandwidth.

As yet another example, the current BSS needs to scan part or all of fundamental channels on the new channelizing set before starting an operation on a channelizing set different from the channelizing set where the BSS operates formerly, so as to ensure that the BSS to be started will not interfere with other OBSSs within its maximal operating bandwidth.

Corresponding to the aforementioned method for channel scanning in a wireless network, the present disclosure further provides a system for channel scanning in a wireless network, including: an AP and STAs associated with the AP. the AP and/or the STAs associated with the AP is configured to perform channel scanning according to one or more of the following ways:
Way A: the AP performs Overlapping Basic Service Set (OBSS) channel scanning on channels within one or more different channelizing sets with a same period or with different periods;
Way B: part or all of STAs associated with the AP perform OBSS channel scanning on channels within one or more different channelizing sets with a same period or with different periods; and
Way C: the AP or part or all of STAs associated with the AP performs single OBSS channel scanning on one or more channelizing sets under event triggering.

What describe are merely preferred embodiments of the disclosure and are not intended to limit the scope of the disclosure.

## Claims

1. A method for channel scanning in a wireless network, comprising:
performing, by an Access Point (AP) and/or Non-AP Stations (STAs) associated with the AP, channel scanning according to one or more of the following ways:
Way A: performing, by the AP, Overlapping Basic Service Set (OBSS) channel scanning on channels within one or more different channelizing sets with a same period or with different periods;
Way B: performing, by part or all of the STAs associated with the AP, OBSS channel scanning on channels within one or more different channelizing sets with a same period or with different periods; and
Way C: performing, by the AP or part or all of the STAs associated with the AP, single OBSS channel scanning on one or more channelizing sets under event triggering.

2. The method for channel scanning in a wireless network according to claim 1, further comprising:
performing, by the AP or the STAs associated with the AP, scanning according to a distributing sequence of central frequency points of part or all of fundamental channels within one channelizing set; or
first performing, by the AP or the STAs associated with the AP, scanning according to a distributing sequence of central frequency points of part or all of fundamental channels within one channelizing set, and then performing scanning according to a distributing sequence of central frequency points of part or all of fundamental channels within another channelizing set; or
performing, by the AP or the STAs associated with the AP, unidirectional scanning according to a distributing sequence of central frequency points of part or all of fundamental channels within all channelizing sets supported.

3. The method for channel scanning in a wireless network according to claim 1, wherein the Way A further comprises:
performing, by the AP, periodic scanning on part or all of fundamental channels of a channelizing set to which a channel used by the AP belongs; and
performing, by the AP, periodic scanning on part or all of fundamental channels of another channelizing set different from the channelizing set to which the channel used by the AP belongs.

4. The method for channel scanning in a wireless network according to claims 1, 2, or 3, further comprising: scanning, by the AP, part or all of fundamental channels within the one or more channelizing sets and receiving system information, then determining whether it can continue operating on original channel or starts a Basic Service Set (BSS) on a new channel according to the system information acquired, and broadcasting or unicasting a channel adjustment message when a channel adjustment or invocation of a new channel is required, wherein the channel adjustment message comprises at least one of: channel adjustment indication information and channel adjustment time information.

5. The method for channel scanning in a wireless network according to claim 4, wherein the channel adjustment message further comprises at least one of:
channelizing set information, master channel information, subsidiary channel information, and bandwidth information.

6. The method for channel scanning in a wireless network according to claim 1, wherein the Way B further comprises:
performing, by the part or all of the STAs associated with the AP, active or passive periodic scanning with a scanning parameter configured locally or informed by the AP on part or all of fundamental channels of a channelizing set to which a channel used by the part or all of STAs associated with the AP belongs;
performing, by the part or all of the STAs associated with the AP, active or passive periodic scanning with a scanning parameter configured locally or informed by the AP on part or all of fundamental channels of another channelizing set different from the channelizing set to which the channel used by the part or all of STAs associated with the AP belongs.

7. The method for channel scanning in a wireless network according to claim 6, wherein the Way B further comprises:
performing, by the part or all of the STAs associated with the AP, OBSS channel scanning and reporting a scanning result to the associated AP.

8. The method for channel scanning in a wireless network according to claim 7, wherein the scanning result comprises at least one of: channel/bandwidth occupation status information and/or channel/bandwidth enable/disable status information.

9. The method for channel scanning in a wireless network according to claim 1, wherein the event triggering is at least one of: interference detecting, higher level signalling, BSS establishing, and BSS starting to operate on a channelizing set different from a channelizing set where the BSS operates formerly.

10. A system for channel scanning in a wireless network, comprising: an Access Point (AP) and Non-AP Stations (STAs) associated with the AP;
the AP and/or the STAs associated with the AP are/is configured to perform channel scanning according to one or more of the following ways:
Way A: the AP performs Overlapping Basic Service Set (OBSS) channel scanning on channels within one or more different channelizing sets with a same period or with different periods;
Way B: part or all of the STAs associated with the AP perform OBSS channel scanning on channels within one or more different channelizing sets with a same period or with different periods; and
Way C: the AP or part or all of the STAs associated with the AP perform single OBSS channel scanning on one or more channelizing sets under event triggering.

11. The system for channel scanning in a wireless network according to claim 10, wherein
the AP or the STAs associated with the AP perform scanning according to a distributing sequence of central frequency points of part or all of fundamental channels within one channelizing set; or
the AP or the STAs associated with the AP first perform scanning according to a distributing sequence of central frequency points of part or all of fundamental channels within one channelizing set, and then performs scanning according to a distributing sequence of central frequency points of part or all of fundamental channels within another channelizing set; or
the AP or the STAs associated with the AP perform unidirectional scanning according to a distributing sequence of central frequency points of part or all of fundamental channels within all channelizing sets supported.

12. The system for channel scanning in a wireless network according to claim 10, wherein the AP is further configured to perform periodic scanning on part or all of fundamental channels of a channelizing set to which a channel used by the AP belongs; and perform periodic scanning on part or all of fundamental channels of another channelizing set different from the channelizing set to which the channel used by the AP belongs.

13. The system for channel scanning in a wireless network according to claims 10, 11, or 12, wherein the AP is further configured to scan part or all of fundamental channels within the one or more channelizing sets and receive system information, then determine whether it can continue operating on original channel or starts a Basic Service Set (BSS) on a new channel according to the system information acquired, and broadcast/unicast a channel adjustment message when a channel adjustment or invocation of a new channel is required, wherein the channel adjustment message comprises at least one of: channel adjustment indication information and channel adjustment time information.

14. The system for channel scanning in a wireless network according to claim 13, wherein the channel adjustment message further comprises at least one of: channelizing set information, master channel information, subsidiary channel information, and bandwidth information.

15. The system for channel scanning in a wireless network according to claim 10, wherein the part or all of the STAs associated with the AP are further configured to perform active or passive periodic scanning with a scanning parameter configured locally or informed by the AP on part or all of fundamental channels of a channelizing set to which a channel used by the part or all of STAs associated with the AP belongs; and perform active or passive periodic scanning with a scanning parameter configured locally or informed by the AP on part or all of fundamental channels of another channelizing set different from the channelizing set to which the channel used by the part or all of STAs associated with the AP belongs.

16. The system for channel scanning in a wireless network according to claim 15, wherein the part or all of the STAs associated with the AP are further configured to perform OBSS channel scanning and report a scanning result to the associated AP.

17. The system for channel scanning in a wireless network according to claim 16, wherein the scanning result comprises at least one of: channel/bandwidth occupation status information and/or channel/bandwidth enable/disable status information.

18. The system for channel scanning in a wireless network according to claim 10, wherein the event triggering is at least one of: interference detecting, higher level signalling, BSS establishing, and BSS starting to operate on a channelizing set different from a channelizing set where the BSS operates formerly.
